# EUROPEAN PATENT APPLICATION

(11) **EP 4 686 390 A2**
(43) Date of publication of application: **04.02.2026**
(21) Application number: 25184714.1
(22) Date of filing: 24.06.2025
(51) Int. Cl.: A01D 34/78, A01D 34/81

(54) **MOWER**

(30) Priority: 01.08.2024 CN 202411053817
(71) Applicant: Nanjing Chervon Industry Co., Ltd., Nanjing, Jiangsu 211106 (CN)
(72) Inventor: YAMAOKA, Toshinari, Nanjing (CN); ZHANG, Qi, Nanjing (CN); YIN, Qiqi, Nanjing (CN); DAI, Cheng, Nanjing (CN)
(74) Representative: Sun, Yiming

(57) **Abstract**

A mower includes an operating assembly and a body. The operating assembly includes an operating portion for a user to operate. The body includes a traveling assembly and a cutting assembly. The cutting assembly includes a cutting blade and a blade cover, and the blade cover is formed with an accommodation portion for accommodating the cutting blade. The blade cover is made of a composite material, and the composite material includes at least an amorphous plastic and a crystalline plastic. The impact resistance strength of the blade cover is greater than or equal to 50 MPa.

## Description

### TECHNICAL FIELD

The present application relates to a power tool and, in particular, to a mower.

### BACKGROUND

A mower is one type of power tool in the related art. The mower is widely used in homes, parks, and other places due to the advantages such as high mowing efficiency and the ability to reduce the labor intensity of mowing workers. The mowing blade of the mower is used for performing a mowing action, and a grass shredding cavity for accommodating the mowing blade is formed on the chassis.

The chassis of the existing mower is generally made of high-impact polypropylene (HIPP), resulting in the following: the overall rigidity of the chassis is insufficient, the wear resistance and impact resistance are relatively poor, and the chassis exhibits moderate surface gloss and is less aesthetically pleasing. As people's requirements for the mowers become higher and higher, newer product generations are expected to achieve significant improvements in the overall mechanical performance, the rotational speeds of mowing blades, and the stall resistance of electric motors. However, the chassis made of HIPP is progressively proving inadequate in satisfying the usage requirements.

This part provides background information related to the present application, and the background information is not necessarily the existing art.

### SUMMARY

A mower includes: an operating assembly including an operating portion for a user to operate; and a body including a traveling assembly and a cutting assembly. The cutting assembly includes: a cutting blade; and a blade cover formed with an accommodation portion for accommodating the cutting blade. The blade cover is made of a composite material, and the composite material includes at least an amorphous plastic and a crystalline plastic. The impact resistance strength of the blade cover is greater than or equal to 50 MPa.

In some examples, the composite material includes a polycarbonate (PC)-polybutylene terephthalate (PBT) composite material.

In some examples, the cutting assembly further includes at least two cutting motors, each of which is configured to drive one cutting blade.

In some examples, the blade cover has an oil contamination resistance duration of greater than or equal to 1 day in a standard oil contamination resistance test.

In some examples, in the composite material, the ratio of the amorphous plastic to the crystalline plastic is greater than or equal to 1.5 and less than or equal to 2.5.

In some examples, the ratio of the amorphous plastic to the crystalline plastic is approximately 1.9.

In some examples, the impact resistance strength of the blade cover is greater than or equal to 55 MPa.

In some examples, the impact resistance strength of the blade cover is greater than or equal to 60 MPa.

A mower includes: a battery mounting portion for mounting a battery pack that provides a power source for the mower; an operating assembly including an operating portion for a user to operate; and a body including a traveling assembly and a cutting assembly. The mower further includes a housing. The housing is made of a composite material, and the composite material includes at least an amorphous plastic and a crystalline plastic. The weight of the mower is less than or equal to 35 kg.

In some examples, the housing includes a body cover covering the body.

In some examples, the cutting assembly includes a cutting blade, and the housing includes a blade cover formed with an accommodation portion for accommodating the cutting blade.

In some examples, a discharge port is formed on the blade cover, and the housing further includes a baffle attached to the blade cover to move between a first position and a second position, where in the case where the baffle is at the first position, the discharge port is opened, and in the case where the baffle is at the second position, the discharge port is closed.

In some examples, the nominal voltage of the battery pack is greater than or equal to 40 V.

In some examples, the maximum output power of the battery pack is greater than or equal to 4500 W.

In some examples, the cutting assembly further includes a cutting motor, where the output power of the cutting motor is greater than or equal to 1000 W.

In some examples, the rotational speed of the cutting motor is greater than or equal to 2800 rpm.

A mower includes: an operating assembly including an operating portion for a user to operate; and a body including a traveling assembly and a cutting assembly. The cutting assembly includes: a cutting motor; a cutting blade driven by the cutting motor to cut vegetation; and a blade cover formed with an accommodation portion for accommodating the cutting blade. The body further includes a body cover partially covering the blade cover. At least one of the blade cover and the body cover is made of a composite material, and the composite material includes at least an amorphous plastic and a crystalline plastic.

In some examples, the impact resistance strength of the blade cover is greater than the impact resistance strength of the body cover.

In some examples, at least two cutting motors and at least two cutting blades are provided, and each cutting motor is configured to drive one cutting blade.

In some examples, a discharge port is formed on the blade cover, and the cutting assembly further includes a baffle attached to the blade cover to move between a first position and a second position, where in the case where the baffle is at the first position, the discharge port is opened, and in the case where the baffle is at the second position, the discharge port is closed.

In some examples, the mower further includes a battery mounting portion for mounting a battery pack that provides a power source for the mower.

In some examples, the nominal voltage of the battery pack is greater than or equal to 40 V.

In some examples, the maximum output power of the battery pack is greater than or equal to 4500 W.

In some examples, the output power of the cutting motor is greater than or equal to 1000 W.

In some examples, the rotational speed of the cutting motor is greater than or equal to 2800 rpm.

In some examples, the impact resistance strength of at least one of the blade cover and the body cover is greater than or equal to 50 MPa.

In some examples, at least one of the blade cover and the body cover has an oil contamination resistance duration of greater than or equal to 1 day in a standard oil contamination resistance test.

In some examples, in the composite material, the ratio of the amorphous plastic to the crystalline plastic is greater than or equal to 1.5 and less than or equal to 2.5.

### BRIEF DESCRIPTION OF DRAWINGS

FIG. 1 is a schematic view of a mower.
FIG. 2 is a schematic view of a single blade and a single cutting deck.
FIG. 3 is a schematic view of two blades and a single cutting deck.
FIG. 4 is a schematic view of two blades and two cutting decks.
FIG. 5 is a schematic view illustrating that a baffle of a mower is at a first position.
FIG. 6 is a schematic view illustrating that a baffle of a mower is at a second position.
FIG. 7 is a schematic view of a body cover of a mower.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

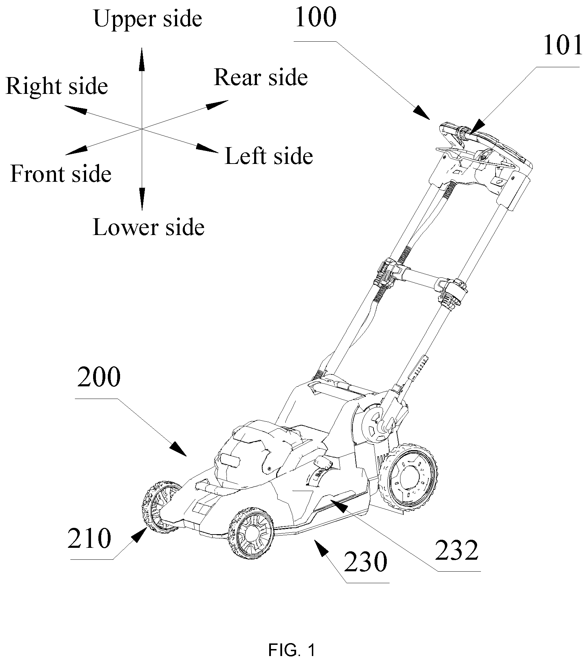

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.As shown in FIGS. 1 to 7, the present application provides a mower. The mower includes an operating assembly 100, a body 200, a battery mounting portion (not shown in the figure), and a power supply assembly (not shown in the figure). The mowers are divided into push mowers, riding mowers, and self-propelled mowers according to different drive modes. The riding mowers are divided into ride-on mowers and stand-on mowers according to the user's riding modes.

As shown in FIG. 1, the operating assembly 100 includes an operating portion 101 for the user to operate. The operating portion 101 may be an operating element or a touchscreen disposed on a control panel. The operating element includes at least one of a joystick, a button, and a knob. The user applies a force to rotate or move the operating element so that the user can not only make the mower perform actions such as starting and stopping, forward and backward movement, turning, and acceleration and deceleration but also make the mowing element start and stop mowing, accelerate, and decelerate.

The body 200 includes a housing 230 and a traveling assembly 210. The housing 230 is a support structure of the body 200. The traveling assembly 210 is used for driving the mower to travel on the plane. The traveling assembly 210 includes traveling wheels and a traveling electric motor. Both the traveling wheels and the traveling electric motor are mounted on the housing 230. The traveling wheels are mounted to the bottom of the housing 230. The traveling electric motor is used for driving the traveling wheels.

In some examples, the traveling wheels include front wheels and rear wheels. The front wheels are rotatably connected to the front portion of the housing 230, and the rear wheels are rotatably connected to the rear portion of the housing 230. In an example, two front wheels are provided, that is, the left front wheel and the right front wheel, and two rear wheels are provided, that is, the left rear wheel and the right rear wheel. In some examples, the mower is driven in a rear-drive manner, and the traveling assembly 210 further includes a transmission mechanism drivingly connecting the rear wheels to the traveling electric motor, where the structure of the transmission mechanism belongs to the existing art and is not described in detail here.

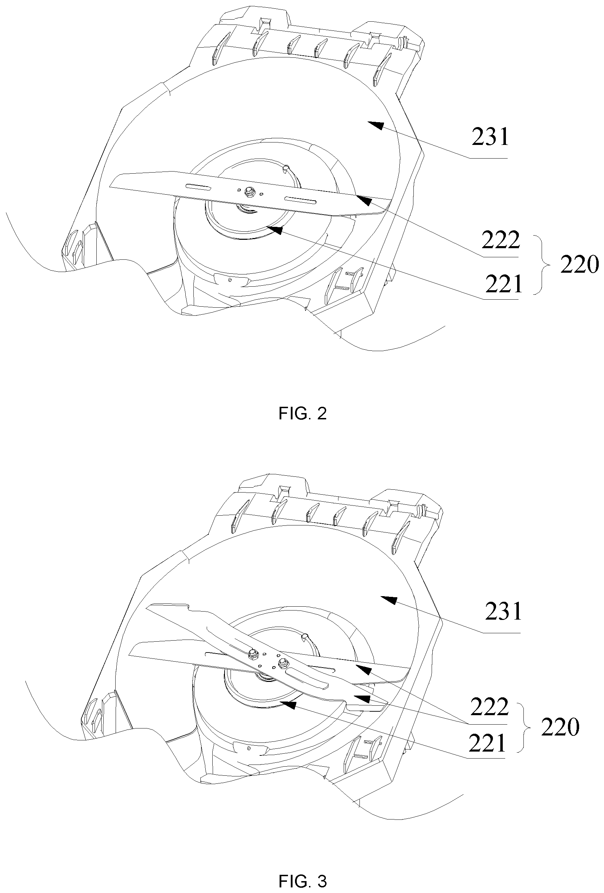

As shown in FIGS. 2 to 4, the body 200 further includes a cutting assembly 220, and the cutting assembly 220 is the body of the mower for performing a cutting action. The cutting assembly 220 includes a cutting blade 222 and a cutting motor 221. The cutting motor 221 is mounted on the housing 230. The cutting blade 222 is driven by the cutting motor 221 to rotate to cut vegetation. In some examples, the cutting blade 222 is elongated, and a motor shaft of the cutting motor 221 is connected to an end of the cutting blade 222 directly or through a transmission shaft. Driven by the cutting motor 221, the cutting blade 222 can rotate about a vertical axis to perform mowing.

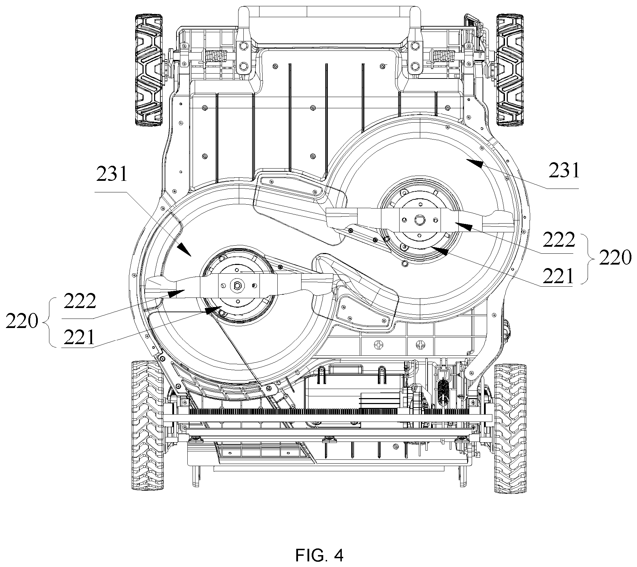

In an example, as shown in FIG. 2, one cutting blade 222 is provided, and correspondingly, one cutting motor 221 is provided so that single-blade cutting is formed in this case. In another example, as shown in FIG. 3, at least two cutting blades 222 are provided, one cutting motor 221 is provided, multiple cutting blades 222 are arranged at intervals about the axis of the motor shaft, and driven by the cutting motor 221, the multiple cutting blades 222 can move simultaneously to perform mowing. In another specific example, as shown in FIG. 4, at least two cutting blades 222 are provided, at least two cutting motors 221 are provided correspondingly, and each cutting motor 221 is configured to drive one cutting blade 222 so that double-blade cutting is formed in this case.

In some examples, the output power of the cutting motor 221 is greater than or equal to 1000 W. In an example, the output power of the cutting motor 221 is 1000 W. In an example, the output power of the cutting motor 221 is 1200 W. In an example, the output power of the cutting motor 221 is 1400 W. In an example, the output power of the cutting motor 221 is 1600 W. In an example, the output power of the cutting motor 221 is 1800 W. In an example, the output power of the cutting motor 221 is 2000 W. It should be noted that the output power refers to that of one cutting motor 221 if the amount of the cutting motors is larger or equal to 2.

In some examples, the rotational speed of the cutting motor 221 is greater than or equal to 2800 rpm. In an example, the rotational speed of the cutting motor 221 is 2800 rpm. In an example, the rotational speed of the cutting motor 221 is 2900 rpm. In an example, the rotational speed of the cutting motor 221 is 3000 rpm. In an example, the rotational speed of the cutting motor 221 is 3100 rpm. In an example, the rotational speed of the cutting motor 221 is 3200 rpm.

In some examples, the housing 230 is made of a composite material formed by an amorphous plastic and a crystalline plastic. In some examples, the composite material includes a PC-PBT composite material, which is a blend of PC and PBT. Polycarbonate (PC), also known as PC plastic, is characterized by rigidity and toughness at room temperature, and polybutylene terephthalate (PBT), commonly known as "polyester", is characterized by stable rigidity and less deformation across a wide temperature range. The PC-PBT composite material integrates the advantages of PC and PBT, providing higher surface hardness, rigidity, and toughness, higher resistance to thermal deformation, and higher resistance to stress cracking. It is to be noted that the ability to resist thermal deformation is of great significance for large housing materials.

Compared with the housing made of HIPP in the existing art, the housing 230 made of the PC-PBT composite material has the advantages below. 1. The housing 230 is featured with excellent impact resistance and wear resistance so that the housing 230 exhibits high resistance to penetration, thereby protecting the user while extending the service life of the housing 230. 2. The overall rigidity of the mower is enhanced, and the deformation resistance performance is improved so that the housing 230 is not easy to deform under the impact of external hard objects. 3. The oil contamination resistance performance is good, and the requirements for the storage environment are low so that the mower is easy to store. 4. The housing 230 is more aesthetically pleasing, exhibits good surface gloss, and has a favorable appearance.

In some examples, in addition to PC resin and PBT resin, the PC-PBT composite material includes a toughening agent, a brominated flame retardant, an inorganic synergistic flame retardant, an anti-dripping agent, an antioxidant, a lubricant, and a nucleating agent. The ratio of PC resin, PBT resin, the toughening agent, the brominated flame retardant, the inorganic synergistic flame retardant, the anti-dripping agent, the antioxidant, the lubricant, and the nucleating agent is set as required.

In an example, the toughening agent includes one or more of methyl methacrylate-butadiene-styrene (MBS), acrylic rubber (ACR), and ethylene-methyl acrylate copolymer (EMA). In an example, the brominated flame retardant includes one or more of brominated epoxy, brominated polystyrene, decabromodiphenylethane, and brominated polycarbonate oligomers. In an example, the inorganic synergistic flame retardant includes one or more of antimony trioxide, zinc borate, and hydrotalcite. In an example, the anti-dripping agent is pure polytetrafluoroethylene (PTFE) powder or PTFE powder coated with one or more of styrene-acrylonitrile (SAN) and methyl methacrylate (MMA). In an example, the antioxidant is an antioxidant in a compound system composed of hindered phenol antioxidants and phosphite antioxidants. In an example, the lubricant is one or more of polyethylene wax, calcium stearate, and ethylene bis stearamide. In an example, the nucleating agent is one of Bruggemann P250 or talc.

With continued reference to FIGS. 2 to 6, the housing 230 includes a blade cover 231, the blade cover 231 is formed with an accommodation portion for accommodating the cutting blade 222, and the blade cover 231 is made of a composite material formed by an amorphous plastic and a crystalline plastic.

In some examples, in the composite material for forming the blade cover 231, the ratio of the amorphous plastic to the crystalline plastic is greater than or equal to 1.5 and less than or equal to 2.5. In an example, the ratio of the amorphous plastic to the crystalline plastic is 1.5. In an example, the ratio of the amorphous plastic to the crystalline plastic is approximately 1.9. In an example, the ratio of the amorphous plastic to the crystalline plastic is approximately 2.2. In an example, the ratio of the amorphous plastic to the crystalline plastic is approximately 2.5.

In some examples, the impact resistance strength of the blade cover 231 is greater than or equal to 50 MPa. In an example, the impact resistance strength of the blade cover 231 is 50 MPa. In an example, the impact resistance strength of the blade cover 231 is 51 MPa. In an example, the impact resistance strength of the blade cover 231 is 52 MPa. In an example, the impact resistance strength of the blade cover 231 is 53 MPa. In an example, the impact resistance strength of the blade cover 231 is 54 MPa.

In some parallel examples, the impact resistance strength of the blade cover 231 is greater than or equal to 55 MPa in a standard impact resistance test. In the following examples, the impact resistance strength (MPa) of the blade cover 231 refers to the strength measured in a standard impact resistance test. In an example, the impact resistance strength of the blade cover 231 is 55 MPa. In an example, the impact resistance strength of the blade cover 231 is 56 MPa. In an example, the impact resistance strength of the blade cover 231 is 57 MPa. In an example, the impact resistance strength of the blade cover 231 is 58 MPa. In an example, the impact resistance strength of the blade cover 231 is 59 MPa.

In some parallel examples, the impact resistance strength of the blade cover 231 is greater than or equal to 60 MPa. In an example, the impact resistance strength of the blade cover 231 is 60 MPa. In an example, the impact resistance strength of the blade cover 231 is 61 MPa. In an example, the impact resistance strength of the blade cover 231 is 62 MPa. In an example, the impact resistance strength of the blade cover 231 is 63 MPa. In an example, the impact resistance strength of the blade cover 231 is 64 MPa.

The standard impact resistance test is an impact resistance test conducted on standard specimens made of different materials. The standard specimens comply with unified industry testing requirements, and the impact resistance test is a unified impact test in the industry. As shown in Table 1, the impact resistance strengths of standard specimens made of HIPP, PC/acrylonitrile butadiene styrene (ABS), and PC/PBT in the standard impact resistance tests are 19 MPa, 53 MPa, and 55 MPa, respectively.

**Table 1**

| | HIPP | PC-ABS Kingfa 601 | PC-PBT Kingfa |
|---|---|---|---|
| Impact resistance strength (MPa) | 19 | 53 | 55 |

In some examples, the impact resistance of the blade cover 231 may be tested using a stone impact test. In the stone impact test, the blade covers 231 made of different materials are subjected to repeated impacts at one or more identical positions in the same stone-throwing manner, while the cutting blade 222 rotates at the maximum rotational speed, until damage appears at the impact position. For example, mowers equipped with the blade covers 231 made of different materials may be placed in sealed boxes, respectively. In the case where the cutting blade 222 rotates at the maximum rotational speed, the stone impact is applied to four diagonal positions of the blade cover 231 by pushing or blowing stones upward through a pipe or in other manners using the same external force. The stones impact the blade cover 231 one by one; and after a certain number of impacts, the impact is stopped. This cycle is repeated until the blade cover 231 is damaged. For example, after 50 stones impact the blade cover 231, the impact is stopped for 5 minutes, and then 50 stones impact the blade cover 231. This cycle is repeated until the blade cover 231 is damaged. In the stone-throwing test, the number of stones thrown until the blade cover 231 is damaged may be used as a parameter for determining the impact resistance strength of the blade cover 231. As shown in Table 2, in the stone-throwing tests of mowers with the blade covers 231 made of three materials (HIPP, PC/ABS, and PC/PBT), the impact resistance strength of the blade cover 231 made of PC/PBT is expressed as the number of stones thrown until the blade cover 231 is damaged, which is 3850.

**Table 2**

| | HIPP | PC-ABS Kingfa 601 | PC-PBT Kingfa |
|---|---|---|---|
| The number of thrown stones | 100 | 1400 | 3850 |

In an example, the impact resistance strength of the blade cover 231 in the stone-throwing test may be expressed as the number of stones thrown being greater than or equal to 1500, or greater than or equal to 2000, or greater than or equal to 2500, or greater than or equal to 3000, or the like. In some examples, the blade cover 231 has an oil contamination resistance duration of greater than or equal to 1 day in a standard oil contamination resistance test. In an example, the standard oil contamination resistance test may be conducted at room temperature by applying various types of oil contaminants to the same position on multiple blade covers 231 which have basically identical shapes but are made of different materials. The oil contaminants are applied with the same coating thickness and in the same coating manner. The oil contamination resistance is determined by observing the time at which cracks or fractures appear at the position to which the oil contaminants are applied. Alternatively, in the preceding manner, the oil contamination resistance tests may be conducted on standard specimens made of different materials. The standard specimens comply with unified industry testing requirements. As shown in Table 3, in the oil contamination resistance tests of standard specimens made of three materials (PC, PC/ABS, and PC/PBT) against peanut oil, corn oil, and the like, the standard specimen made of PC/PBT has an oil contamination resistance duration as long as 7 days.

**Table 3**

| | PC | PC/ABS | PC/PBT |
|---|---|---|---|
| Peanut coil | Fractured after 10 min | Fractured after 10 h | No fracture within 7 days |
| Corn oil | Fractured after 10 min | Fractured after 2 h | No fracture within 7 days |
| Lard | Fractured after 5 min | Fractured after 1.5 h | No fracture within 7 days |
| White mineral oil | Fractured after 3 min | Fractured after 30 min | No fracture within 7 days |
| Rust preventive oil | Fractured after 10 min | Fractured after 20 min | No fracture within 7 days |
| Essential oil | Fractured after 3 min | Fractured after 20 min | No fracture within 7 days |
| Acetone | Fractured after 1 min | Fractured after 5 min | No fracture within 7 days |

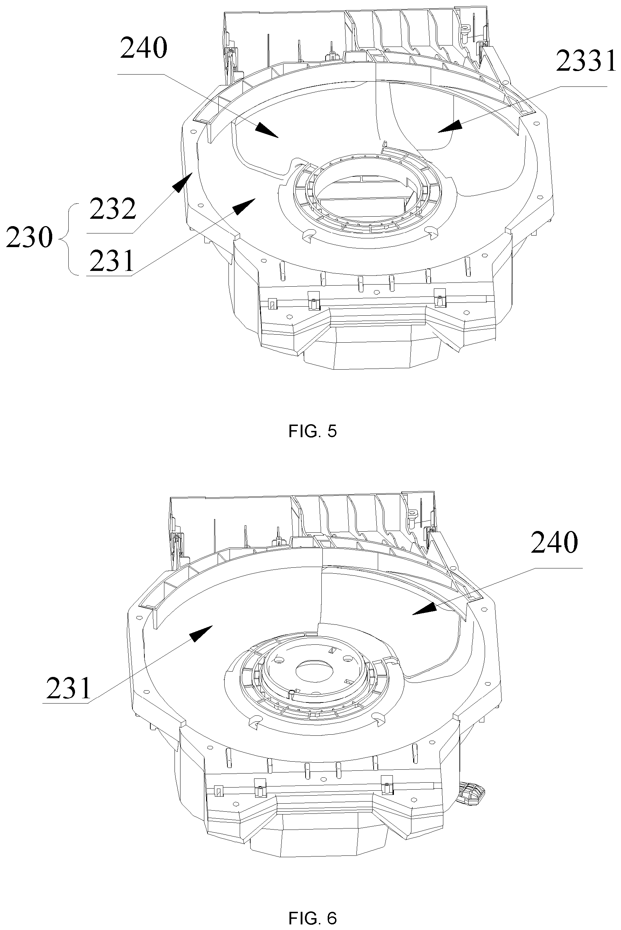

The blade cover 231 forms a cutting cavity, and the cutting blade 222 rotates in the cutting cavity to cut vegetation. With continued reference to FIG. 5, the blade cover 231 is partially hollowed out to form a discharge port 2311, and the cut vegetation is discharged into a grass discharge passage through the discharge port 2311. The mower has a grass shredding mode and a grass collecting mode. In the grass shredding mode, the cut grass is repeatedly thrown up and down in the cutting cavity and thus cut repeatedly so that the grass is shredded into tiny pieces. Therefore, in the grass shredding mode, the discharge port 2311 needs to be closed. In the grass collecting mode, the shredded grass needs to be discharged from the cutting cavity through the discharge port 2311. Therefore, in the grass collecting mode, the discharge port 2311 needs to be opened.

To open and close the discharge port 2311, as shown in FIGS. 5 and 6, the housing 230 further includes a baffle 240 attached to the blade cover 231 to move between a first position and a second position. In the case where the baffle 240 is at the first position, the discharge port 2311 is opened, and in the case where the baffle 240 is at the second position, the discharge port 2311 is closed.

In some examples, the discharge port 2311 is roughly fan-shaped, and the baffle 240 includes a roughly fan-shaped blocking portion and an annular connecting portion. The blocking portion can be rotated to a position opposite to the discharge port to close the discharge port 2311. The connecting portion is connected to a drive assembly, and the drive assembly is used for driving the baffle 240 to rotate between the first position and the second position. The structure of the drive assembly is set as required. The drive assembly may be set as a handle rod that can drive the connecting portion to rotate about the central axis or may be set as a combination of a drive motor and a gear ring that can drive the connecting portion to rotate about the central axis, as long as the baffle 240 can be rotated.

In addition to using the preceding rotation manner to switch the baffle 240 between the first position and the second position, the baffle 240 may be set to be detachable. For example, when the baffle 240 is manually mounted at the discharge port 2311, the discharge port 2311 is closed; and after the baffle 240 is manually removed from the discharge port 2311, the discharge port 2311 is opened. According to requirements, the detachable connection manner may be set to a connector connection, a snap connection, or the like.

In some examples, the baffle 240 is made of a composite material formed by an amorphous plastic and a crystalline plastic. Therefore, the baffle 240 has better impact resistance performance, better deformation resistance performance, and better oil contamination resistance performance and is more aesthetically pleasing. In some parallel examples, the baffle 240 may be made of a conventional plastic. In this case, the blade cover 231 may be made of a composite material formed by an amorphous plastic and a crystalline plastic or may be made of metal or a conventional plastic.

In some examples, as shown in FIGS. 2 and 3, when one cutting blade is provided, one blade cover 231 is provided correspondingly to form a single cutting deck. In some examples, as shown in FIG. 4, when two mowing blades are provided, two blade covers 231 are provided correspondingly to form two cutting decks.

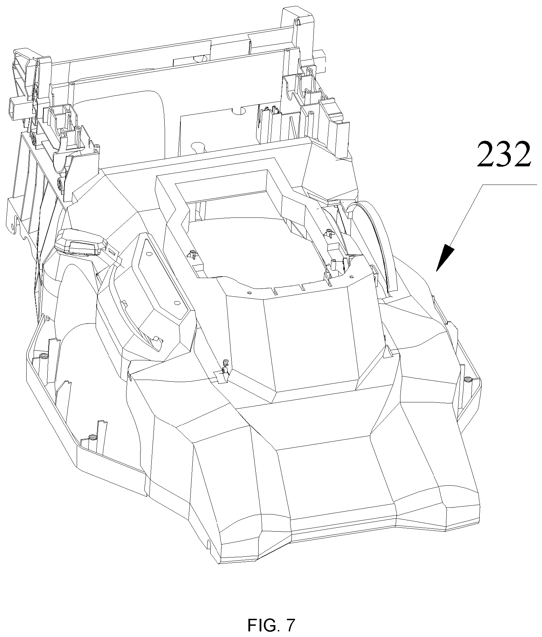

With continued reference to FIGS. 1 and 7, the housing 230 further includes a body cover 232. The body cover 232 covers the body 200. The body cover 232 is made of a composite material formed by an amorphous plastic and a crystalline plastic. It is to be noted that, in some examples, the housing 230 of the mower may include only one of the body cover 232 and the blade cover 231. If only the body cover 232 exists, at least part of the body cover 232 is used as the blade cover 231. In some parallel examples, the housing 230 includes both the body cover 232 and the blade cover 231, the body cover 232 and the blade cover 231 form a double-layer structure, the body cover 232 partially covers the blade cover 231, and at least one of the body cover 232 and the blade cover 231 is made of a composite material formed by an amorphous plastic and a crystalline plastic. The blade cover 231 has been introduced above, and the details are not repeated here.

In some examples, in the composite material for forming the body cover 232, the ratio of the amorphous plastic to the crystalline plastic is greater than or equal to 1.5 and less than or equal to 2.5. In an example, the ratio of the amorphous plastic to the crystalline plastic is 1.5. In an example, the ratio of the amorphous plastic to the crystalline plastic is approximately 1.9. In an example, the ratio of the amorphous plastic to the crystalline plastic is 2.2. In an example, the ratio of the amorphous plastic to the crystalline plastic is 2.5.

In some examples, the impact resistance strength of the body cover 232 is greater than or equal to 50 MPa in a standard specimen test. In an example, the impact resistance strength of the body cover 232 is 50 MPa. In an example, the impact resistance strength of the body cover 232 is 51 MPa. In an example, the impact resistance strength of the body cover 232 is 52 MPa. In an example, the impact resistance strength of the body cover 232 is 53 MPa. In an example, the impact resistance strength of the body cover 232 is 54 MPa.

In some parallel examples, the impact resistance strength of the body cover 232 is greater than or equal to 55 MPa. In an example, the impact resistance strength of the body cover 232 is 55 MPa. In an example, the impact resistance strength of the body cover 232 is 56 MPa. In an example, the impact resistance strength of the body cover 232 is 57 MPa. In an example, the impact resistance strength of the body cover 232 is 58 MPa. In an example, the impact resistance strength of the body cover 232 is 59 MPa.

In some parallel examples, the impact resistance strength of the body cover 232 is greater than or equal to 60 MPa. In an example, the impact resistance strength of the body cover 232 is 60 MPa. In an example, the impact resistance strength of the body cover 232 is 61 MPa. In an example, the impact resistance strength of the body cover 232 is 62 MPa. In an example, the impact resistance strength of the body cover 232 is 63 MPa. In an example, the impact resistance strength of the body cover 232 is 64 MPa.

In an example, the impact resistance strength of the body cover 232 in the stone-throwing test may be expressed as the number of stones thrown being greater than or equal to 1500, or greater than or equal to 2000, or greater than or equal to 2500, or greater than or equal to 3000, or the like.

It is to be noted that, in some examples, the impact resistance strength of the blade cover 231 is greater than the impact resistance strength of the body cover 232.

In some examples, the body cover 232 has an oil contamination resistance duration of greater than or equal to 1 day in a standard oil contamination resistance test.

The battery mounting portion is used for mounting a battery pack, and the battery pack is used for providing a power source for the mower. The battery mounting portion may be integrated with the housing 230 or may be a separate structure connected to the housing 230. In some examples, a battery insertion cavity is formed on the battery mounting portion, and the battery pack is inserted into or removed from the battery insertion cavity along an inclined direction.

In some examples, the nominal voltage of the battery pack is greater than or equal to 40 V. In an example, the nominal voltage of the battery pack is 40 V. In an example, the nominal voltage of the battery pack is 45 V. In an example, the nominal voltage of the battery pack is 50 V. In an example, the nominal voltage of the battery pack is 55 V. In an example, the nominal voltage of the battery pack is 60 V.

In some examples, the maximum output power of the battery pack is greater than or equal to 4500 W. In an example, the maximum output power of the battery pack is 4500 W. In an example, the maximum output power of the battery pack is 4600 W. In an example, the maximum output power of the battery pack is 4700 W. In an example, the maximum output power of the battery pack is 4800 W. In an example, the maximum output power of the battery pack is 4900 W. In an example, the maximum output power of the battery pack is 5000 W.

In some examples, the weight of the mower is less than or equal to 35 kg. As shown in FIGS. 2 and 3, when the mower has a single cutting deck, the bare weight of the mower without the battery pack is less than or equal to 35 kg. In an example, the bare weight of the mower with a single cutting deck is 35 kg. In an example, the bare weight of the mower with a single cutting deck is 34 kg. In an example, the bare weight of the mower with a single cutting deck is 33 kg. In an example, the bare weight of the mower with a single cutting deck is 32 kg. In an example, the bare weight of the mower with a single cutting deck is 31 kg. In an example, the bare weight of the mower with a single cutting deck is 30 kg.

When the mower has two cutting decks, the bare weight of the mower without the battery pack is less than or equal to 55 kg. In an example, the bare weight of the mower with two cutting decks is 55 kg. In an example, the bare weight of the mower with two cutting decks is 54 kg. In an example, the bare weight of the mower with two cutting decks is 53 kg. In an example, the bare weight of the mower with two cutting decks is 52 kg. In an example, the bare weight of the mower with two cutting decks is 51 kg. In an example, the bare weight of the mower with two cutting decks is 50 kg.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A mower, comprising:
an operating assembly (100) comprising an operating portion (101) for a user to operate; and
a body (200) comprising a traveling assembly (210) and a cutting assembly (220), the cutting assembly (220) comprises a cutting blade (222) and a blade cover (231) formed with an accommodation portion for accommodating the cutting blade, wherein the blade cover is made of a composite material comprising at least an amorphous plastic and a crystalline plastic; and impact resistance strength of the blade cover is greater than or equal to 50 MPa.

2. The mower of claim 1, wherein the composite material comprises at least a polycarbonate (PC)-polybutylene terephthalate (PBT) composite material.

3. The mower of claim 1, wherein the cutting assembly further comprises at least two cutting motors (221), each of which is configured to drive one cutting blade (222).

4. The mower of claim 1, wherein the blade cover has an oil contamination resistance duration of greater than or equal to 1 day in a standard oil contamination resistance test.

5. The mower of claim 1, wherein in the composite material, a ratio of the amorphous plastic to the crystalline plastic is greater than or equal to 1.5 and less than or equal to 2.5.

6. The mower of claim 5, wherein the ratio of the amorphous plastic to the crystalline plastic is approximately 1.9.

7. The mower of claim 1, wherein the impact resistance strength of the blade cover is greater than or equal to 55 MPa.

8. The mower of claim 1, wherein the impact resistance strength of the blade cover is greater than or equal to 60 MPa.

9. The mower of claim 1, wherein the body further comprises a housing (230) made of a composite material, the composite material comprises at least an amorphous plastic and a crystalline plastic, and weight of the mower is less than or equal to 35 kg.

10. The mower of claim 9, wherein the housing further comprises a body cover (232) covering at least part of the cutting assembly.

11. The mower of claim 10, wherein a discharge port (2311) is formed on the blade cover, and the housing further comprises a baffle (240) attached to the blade cover to move between a first position and a second position, wherein in a case where the baffle is at the first position, the discharge port is opened, and in a case where the baffle is at the second position, the discharge port is closed.

12. The mower of claim 9, wherein a nominal voltage of the battery pack is greater than or equal to 40 V.

13. The mower of claim 9, wherein maximum output power of the battery pack is greater than or equal to 4500 W.

14. The mower of claim 3, wherein output power of the cutting motor is greater than or equal to 1000 W.

15. The mower of claim 14, wherein a rotational speed of the cutting motor is greater than or equal to 2800 rpm.
